# NEUE EUROPÄISCHE PATENTSCHRIFT

(11) **EP 0 451 492 B2**
(45) Veröffentlichungstag und Bekanntmachung des Hinweises auf die Entscheidung über den Einspruch: **27.05.1998**
(45) Hinweis auf die Patenterteilung: 26.01.1994
(21) Anmeldenummer: 91103115.1
(22) Anmeldetag: 01.03.1991
(51) Int. Cl.: B60R 22/18

(54) **Vorrichtung zur Verankerung eines Gurtbandendes an einem Fahrzeugaufbau**
Device for anchoring the safety belt end on the vehicle superstructure
Dispositif pour ancrer l'extrémité d'une ceinture de sécurité sur la carrosserie d'un véhicule

(30) Priorität: 12.04.1990 DE 9004266 U
(43) Veröffentlichungstag der Anmeldung: 16.10.1991
(73) Patentinhaber: TRW Occupant Restraint Systems GmbH, 73553 Alfdorf (DE)
(72) Erfinder: Pfeiffer, Leo, W-7080 Aalen 1 (DE); Ostertag, Frieder, W-7070 Schwäbisch Gmünd (DE)
(74) Vertreter: Degwert, Hartmut, Dipl.-Phys.

(56) Entgegenhaltungen:
- EP-A- 0 078 945
- DE-A- 2 814 302
- DE-A- 3 624 155
- DE-A- 3 924 670
- DE-B- 1 655 079
- FR-A- 2 060 510
- JP-U- 1 154 956
- US-A- 4 244 601

## Beschreibung

Die Erfindung betrifft eine Vorrichtung zur Verankerung eines Gurtbandendes an einem Fahrzeugaufbau in einem Sicherheitsgurtsystem nach dem Oberbegriff des Patentanspruchs 1.

In manchen Sicherheitsgurtsystemen wird eine Verankerung des Gurtbandendes am Fahrzeugaufbau benötigt, die eine Verschiebung des Verankerungspunktes in Längsrichtung des Fahrzeugaufbaus zuläßt. In diesem Falle wird das mit einer Öse versehene Gurtbandende auf einem am Fahrzeugaufbau befestigten Bügel geführt, der einen geraden Abschnitt und zwei gekrümmte Endabschnitte aufweist. Die einfachste Lösung besteht darin, das Gurtbandende mittels einer an ihm selbst gebildeten Schlaufe auf dem Bügel zu führen. Bei einer solchen Ausbildung zeigt sich aber, daß die Gleit bewegung der Schlaufe auf dem Bügel durch erhebliche Reibungskräfte behindert wird. Zur Verminderung der Reibung kann am Gurtbandende eine beispielsweise durch ein Kunststoffteil gebildete Öse angebracht werden. Es sind Kunststoffe verfügbar, die eine geringe Gleitreibung gewährleisten. Der Aufwand gegenüber einer einfachen Gurtbandschlaufe wird aber durch ein solches Teil erheblich vergrößert. überdies können im Betrieb störende Klappergeräusche auftreten. Eine solche gattungsgemäße Vorrichtung ist beispielsweise in der EP-A-078945 offenbart.

Der Erfindung liegt die Aufgabe zugrunde, eine Vorrichtung zur Verankerung eines Gurtbandendes an einem Fahrzeugaufbau zur Verfügung zu stellen, die eine besonders leichtgängige Führung auf dem Bügel gewährleistet und vom Aufwand sowie von der Geräuschfreihheit her mit einer einfachen Gurtbandschlaufe vergleichbar ist.

Diese Aufgabe wird bei einer Vorrichtung der eingangs angegebenen Art erfindungsgemäß durch die Merkmale des Anspruchs 1 gelöst. Es wurde gefunden, daß durch diese Ausbildung der Gurtbandschlaufe ihre Steifigkeit erheblich vergrößert wird, so daß die Größe der Berührungsoberfläche zwischen Gurtband und Bügel vermindert wird. Die verminderte Berührungsoberfläche hat wiederum einen kleineren Umschlingungswinkel zur Folge. Die Größe des Umschlingungswinkels ist für die Reibungskräfte zwischen Gurtband und Bügel das wichtigste Kriterium, weil sie exponentiell eingeht. Durch die erfindungsgemäße Maßnahme wird also verhindert, daß ein großer effektiver Umschlingungswinkel durch Anschmiegen des Gurtbandes am Bügel zustande kommt. Material- und Montageaufwand sind bei der erfindungsgemäßen Vorrichtung vergleichbar mit einer einfachen Gurtbandschlaufe. De zusätzliche Aufwand für die querverlaufende Naht ist vernachlässigbar.

Besonders günstig ist es, wenn die Schlaufe im Bereich ihres Scheitels mit zwei symmetrisch zu ihrem Scheitel angeordneten, parallelen und querverlaufenden Nähten versehen ist. Der Abstand zwischen den beiden Nähten ist vorzugsweise etwa gleich dem Durchmesser der Metallstange, aus welcher der Bügel gebogen ist. Es ergibt sich dann eine Form der Schlaufe, die aufgrund ihrer Eigensteifigkeit die Bügelstange umgibt, ohne Druck auf sie auszuüben, solange kein Zug am Gurtband wirksam ist Das Gurtband besitzt daher im Bereich der Schlaufe keinerlei Neigung, sich an die Oberfläche des Bügels anzuschmiegen. Dieser Effekt wird noch dadurch verstärkt, daß der Scheitel der Schlaufe zu ihrem Inneren hin gewölbt ist. Diese Wölbung ist im übrigen auch an die Rundung des Bügels in seinen Endabschnitten angepaßt, so daß die Schlaufe auch an diesen Stellen leicht verschiebbar bleibt. Die Steifigkeit der Schlaufe wird weiter erhöht, wenn gemäß der bevorzugten Ausführungsform die nach innen gefalteten Gurtbandrandteile durch eine parallel zum Rand verlaufende Naht mit dem darüberliegenden mittleren Gurtbandbereich verbunden sind.

Mehrere Ausführungsformen der Erfindung werden nun unter Bezugnahme auf die Zeichnung näher beschrieben. In der Zeichnung zeigen:
- Fig. 1: eine schematische Darstellung eines auf einem Bügel gleitverschiebbaren Gurtbandendes;
- Fig. 2: eine im Bereich ihres Scheitels aufgeklappt dargestellte Gurtbandschlaufe bei der erfindungsgemäßen Vorrichtung;
- Fig. 3 und 4: zwei Ausführungsvarianten; und
- Fig. 5: eine bevorzugte Ausführungsform.

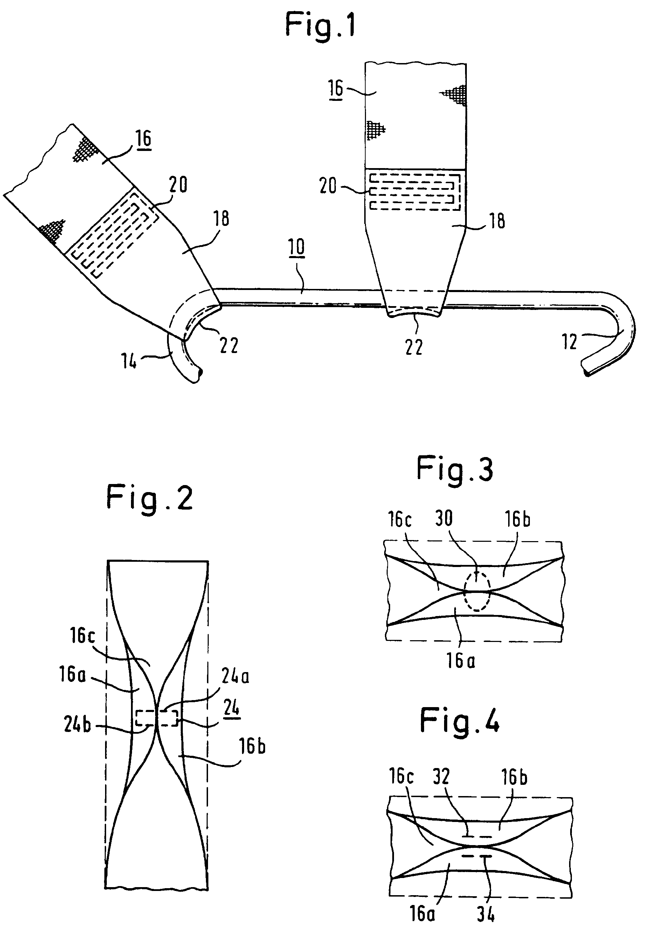

Aus einer Metallstange von rundem Querschnitt ist ein Bügel 10 gebogen, der gekrümmte Endabschnitte 12, 14 aufweist, über die er an einem Fahrzeugaufbau (nicht gezeigt) befestigt werden kann. Ein Gurtband 16 ist an seinem Ende mit einer Schlaufe 18 versehen, die auf dem Bügel 10 geführt ist. Die Schlaufe 18 ist durch Umfalten des Gurtbandendes und Sichern desselben mittels einer mehrfachen Naht 20 gebildet. Im Bereich ihres Scheitels 22 ist die Schlaufe 18 in einer besonderen Weise umgefaltet, die aus Fig. 2 ersichtlich ist. In diesem Bereich ist das Gurtband an seinen beiden Längsrändern 16a, 16b zum Inneren der Schlaufe 18 hin umgefaltet, so daß die Gurtbandkanten in der Gurtbandmitte aneinander anstoßen oder in geringem Abstand voneinander liegen. Die umgefalteten Längsränder 16a, 16b sind mit dem darüberliegenden, mittleren Gurtbandteil 16c durch eine doppelte Naht 24 vernäht. Diese doppelte Naht 24 besteht aus zwei parallelen Nähten 24a, 24b, die sich senkrecht zur Längsrichtung des Gurtbandes erstrecken und deren Abstand voneinander etwa gleich dem Durchmesser der Metallstange ist, aus welcher der Bügel 10 gebogen ist. Beim Anbringen dieser Doppelnaht 24 im Scheitelbereich der Schlaufe 18 stellt sich selbsttätig eine Wölbung des Scheitels 22 zum Inneren der Schlaufe 18 hin ein, wie in Fig. 1 gezeigt ist. Diese Wölbung entspricht im wesentlichen der Krümmung an den Endabschnitten 12, 14 des Bügels 10. Durch die Anordnung und Dimensionierung der Doppelnaht 24 im Scheitelbereich der Gurt bandschlaufe 18 wird dieser eine hohe Steifigkeit verliehen, obwohl das Gurtband selbst sehr geschmeidig ist. Die lichte Weite der Öse im unbelasteten Zustand des Gurtbandes ist etwas größer als der Durchmesser des Bügels 10, so daß eine Anschmiegung des Gurtbandes an der Oberfläche des Bügels 10 vermieden wird. Die Wölbung des Scheitels 22 der Schlaufe 18 zu ihrem Inneren hin hat auch zur Wirkung, daß der Abgangswinkel des Gurt bandes 16 von dem Bügel 10 verschieden von 90° sein kann, ohne die Leichtgängigkeit der Gurtbandführung zu beeinträchtigen. Im Bereich der gekrümmten Bügelabschnitte ist dagegen, wie in Fig. 1 gleichfalls gezeigt, das Gurtband aufgrund der an die Krümmung in diesen Endabschnitten 12, 14 angepaßten Wölbung des Scheitels 22 der Schlaufe 18 bestrebt, einen Abgangswinkel anzunehmen, der in etwa einer Radialrichtung der Bügelkrümmung entspricht, was ebenfalls von Vorteil sein kann.

Bei der Ausführungsform nach Fig. 3 sind die umgefalteten Längaränder 16a, 16b an dem mittleren Gurtbandteil 16c durch Verschweißen mittels Ultraschall festgelegt. Der Bereich 30, in dem die Festlegung erfolgt, ist in Fig. 3 durch eine gestrichelte Umrißlinie markiert.

Bei der Ausführungsform nach Fig. 4 erfolgt die Festlegung der Längsränder 16a, 16b an dem mittleren Gurtbandteil 16c durch zwei parallele, kurze Längsnähte 32, 34 nahe den Bandkanten. In Abwandlung dieser Ausführungsform sind je Längsrand mehrere kurze Längsnähte vorgesehen.

Schließlich können auch kombinierte Längs- und Quernähte sowie schräg zur Längsrichtüng verlaufende Nähte Anwendung finden.

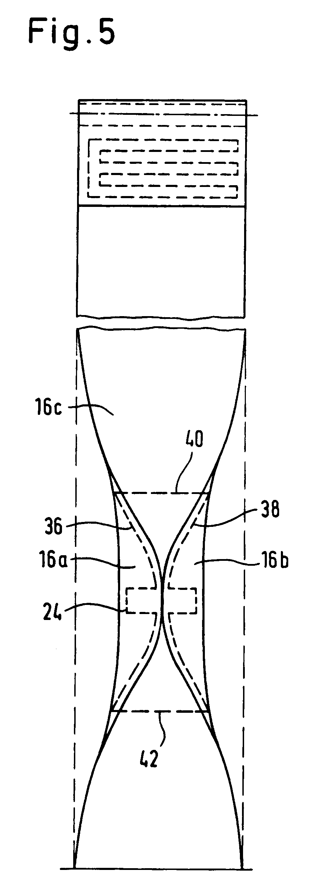

Bei der in Fig. 5 gezeigten Ausführungsform ist zusätzlich zu der doppelten Naht 24 jeder der nach innen umgefalteten Längsränder 16a, 16b des Gurtbandes mit einer parallel zu und in geringem Abstand von dem betreffenden Längsrand angeordneten Naht 36, 38 mit dem darüberliegenden, mittleren Gurtbandteil 16c verbunden. Die Steifigkeit der Schlaufe wird so weiter erhöht. Überdies sind zwei Quernähte 40, 42 vorhanden, welche jeweils die Enden der Nähte 36, 38 miteinander verbinden. Durch die bei dieser Ausführungsform besonders hohe Steifigkeit der Schlaufe wird ihre Beweglichkeit auf dem Bügel 10 weiter gesteigert.

## Patentansprüche

1. Vorrichtung zur Verankerung eines Gurtbandendes an einem Fahrzeugaufbau in einem Sicherheitsgurtsystem, mit einem am Fahrzeugaufbau befestigten Bügel (10), auf dem eine am Gurtbandende angeordnete Öse gleitverschiebbar geführt ist, dadurch gekennzeichnet, daß die Öse durch eine Schlaufe (18) des Gurtbandes (16) selbst gebildet ist, daß das Gurtband (16) im Bereich des Scheitels (22) der Schlaufe (18) an seinen beiden Längsrändern (16a, 16b) zum Inneren der Schlaufe umgefaltet ist, daß die umgefalteten Gurtbandrandteile an dem darüberliegenden mittleren Gurtbandbereich (16c) dauerhaft festgelegt sind und daß der Scheitel (22) der Schlaufe (18) zu ihrem Inneren hin gewölbt ist.

2. Vorrichtung nach Anspruch 1, dadurch gekennzeichnet, daß die Festlegung durch wenigstens eine querverlaufende Naht (24) hergestellt ist.

3. Vorrichtung nach Anspruch 2, dadurch gekennzeichnet, daß die Schlaufe (18) im Bereich ihres Scheitels (22) mit zwei symmetrisch zu ihrem Scheitel (22) angeordneten, parallelen und quer verlaufenden Nähten (24a, 24b) versehen ist.

4. Vorrichtung nach Anspruch 3, dadurch gekennzeichnet, daß der Abstand der beiden Nähte (24a, 24b) etwa gleich dem Durchmesser der Metallstange ist, aus welcher der Bügel (10) gebogen ist.

5. Vorrichtung nach Anspruch 1, dadurch gekennzeichnet, daß die Festlegung durch Verschweißung des Gurtbandmaterials hergestellt ist.

6. Vorrichtung nach Anspruch 1, dadurch gekennzeichnet, daß die Festlegung durch wenigstens zwei parallele, in Längsrichtung verlaufende Nahtabschnitte nahe den Bandkanten hergestellt ist.

7. Vorrichtung nach einem der vorstehenden Ansprüche, dadurch gekennzeichnet, daß die Längsränder (16a, 16b) des Gurtbandes durch je eine parallel zu und im Abstand von dem betreffenden Rand angeordnete Naht (36, 38) mit dem darüberliegenden, mittleren Bereich (16c) des Gurtbandes verbunden sind.

8. Vorrichtung nach Anspruch 7, dadurch gekennzeichnet, daß die Enden dieser entlang den Längsrändern (16a, 16b) verlaufenden Nähte (36, 38) durch je eine Quernaht (40, 42) miteinander verbunden sind.

## Claims

1. Means for anchoring a belt webbing end to a vehicle bodywork in a safety belt system comprising a stirrup member (10) which is secured to the vehicle bodywork and on which an eye arranged at the webbing end is slidably guided, characterized in that the eye is formed by a loop (18) of the webbing (16) itself, that the webbing (16) is folded in the region of the apex (22) of the loop (18) along its two longitudinal edges (16a, 16b) towards the interior of the loop, that the folded-over webbing edge portions are permanently secured to the central webbing region (16c) lying thereabove, and that the apex (22) of the loop (18) is arched towards its interior.

2. Means according to claim 1, characterized in that the securing is established by at least one transverse seam (24).

3. Means according to claim 2, characterized in that the loop (18) is provided in the region of its apex (22) with two parallel transversely extending seams (24a, 24b) arranged symmetrically to the apex (22) thereof.

4. Means according to claim 3, characterized in that the spacing of the two seams (24a, 24b) is substantially equal to the diameter of the metal rod from which the stirrup member (10) is bent.

5. Means according to claim 1, characterized in that the securing is established by welding of the webbing material.

6. Means according to claim 1, characterized in that the securing is established by at least two parallel seam portions extending in the longitudinal direction near the webbing edges.

7. Means according to any one of the preceding claims, characterized in that the longitudinal edges (16a, 16b) of the webbing are fixed to the central webbing region (16c) lying thereabove by a seam (36, 38) extending parallel to and a small distance apart from the corresponding edge.

8. Means according to claim 7, characterized in that the ends of said seams (36, 38) extending along the longitudinal edges (16a, 16b) are respectively connected by a transverse seam (40, 42).

## Revendications

1. Dispositif d'ancrage d'une extrémité de sangle de ceinture sur une carrosserie de véhicule, dans un système de ceinture de sécurité, comportant un étrier (10) fixé sur la carrosserie du véhicule et sur lequel est guidé coulissant un oeillet placé à l'extrémité de la sangle de ceinture, caractérisé en ce que l'oeillet est formé lui-même par une boucle (18) de la sangle de ceinture (16), en ce que la sangle de ceinture (16) est repliée dans la région du sommet (22) de la boucle (18), sur ses deux lisières longitudinales (16a, 16b), vers l'intérieur de la boucle, et en ce que les parties de bordure de la sangle de ceinture repliées sont fixées durablement à la région centrale (16c), située au-dessus, de la sangle de ceinture, et en ce que le sommet (22) de la boucle (18) est bombé vers l'intérieur de celle-ci.

2. Dispositif selon la revendication 1, caractérisé en ce que la fixation est réalisée par au moins une couture (24) transversale.

3. Dispositif selon la revendication 2, caractérisé en ce que la boucle (18) est pourvue, dans la région de son sommet (22), de deux coutures (24a, 24b) parallèles et s'étendant transversalement, situées symétriquement par rapport à son sommet (22).

4. Dispositif selon la revendication 3, caractérisé en ce que l'écartement des deux coutures (24a, 24b) est à peu près égal au diamètre de la barre métallique dans laquelle l'étrier (10) a été réalisé par cintrage.

5. Dispositif selon la revendication 1, caractérisé en ce que la fixation est réalisée par soudure de la matière de la sangle de la ceinture.

6. Dispositif selon la revendication 1, caractérisé en ce que la fixation est réalisée par au moins deux parties cousues parallèles, s'étendant dans la direction longitudinale, à proximité des lisières de la sangle.

7. Dispositif selon l'une des revendication précédentes, caractérisé en ce que chacune des lisières longitudinales (16a, 16b) de la sangle de ceinture est assemblée avec la partie centrale (16c), située au-dessus, de la sangle de ceinture, par une couture (36, 38) parallèle à la lisière concernée et espacée de celle-ci.

8. Dispositif selon la revendication 7, caractérisé en ce que les extrémités de ces coutures (36, 38) s'étendant le long des lisières longitudinales (16a, 16b) sont assemblées entre elles par une couture transversale (40, 42).
